# EUROPEAN PATENT SPECIFICATION

(11) **EP 1 021 378 B1**
(45) Date of publication and mention of the grant of the patent: **07.05.2003**
(21) Application number: 99929595.9
(22) Date of filing: 07.07.1999
(51) Int. Cl.: C02F 3/30, C02F 3/24, C02F 3/12

(54) **APPARATUS AND PROCESS FOR SEWAGE AND WASTEWATER TREATMENT**
VORRICHTUNG UND VERFAHREN ZUR ABWASSERBEHANDLUNG
APPAREIL ET PROCEDE DE TRAITEMENT DES EAUX USEES

(30) Priority: 07.07.1998 GB 9814591
(43) Date of publication of application: 26.07.2000
(73) Proprietor: WRC PLC, Swindon, Wiltshire SN5 8YF (GB)
(72) Inventor: Hobson, John, Devizes, Wiltshire SN10 1PS (GB)
(74) Representative: Kirkham, Nicholas Andrew
(86) International application number: GB9902176
(87) International publication number: WO00001623

(56) References cited:
- WO-A-91/13033
- GB-A- 976 805
- US-A- 4 042 510
- US-A- 4 259 185
- US-A- 4 482 510
- US-A- 4 659 464
- US-A- 5 156 742
- US-A- 5 234 595
- US-A- 5 352 357

## Description

The present invention relates to a wastewater treatment apparatus and a process for treating wastewater or sewage, that is for the biological treatment of sewage and wastewater.

Existing biological treatment processes fall into one of two classes, fixed-film and suspended-growth systems.

In fixed-film processes, wastewater is poured over biological films consisting of micro-organisms which develop on an inert support medium. In trickling filters wastewater is distributed over the top of such biofilms growing on a support medium. Oxygen necessary for treatment comes from air which naturally ventilates the biofilms. Alternatively the biofilms and support medium can be flooded in which case oxygen is supplied by air bubbled into the liquid under the support medium or within the lower portion of the medium.

In suspended growth systems, such as the activated sludge process, a culture of micro-organisms is maintained suspended in the wastewater being treated. Oxygen is provided by aeration by one of a number of means such as via diffusers placed in the bottom of the tank or by mechanical aeration at the surface of the tank. An important feature of all suspended growth systems is that sufficient energy must be supplied by the aeration system to maintain the flocculated micro-organisms in suspension. Another important feature of such systems is that the treated wastewater must be separated from the suspended micro-organisms, usually by settlement, though membranes can be used, and the separated micro-organisms returned to the process.

Trickling filter systems and other fixed-film systems have higher capital costs but lower running costs than suspended growth systems. The economics is such that suspended growth systems are always more cost effective for large installations. Flooded filters have both high capital cost and relatively high running costs but can be attractive where space is limited.

The current invention can be viewed as an improvement of suspended growth processes. In order to understand some of the potential benefits of the present invention, the following description of suspended growth systems is given. Two important features of suspended growth processes are cost and degree of treatment. The capital cost is made up mostly of the main tank, the clarification tank and the aeration equipment. The running cost is made up mostly of the energy required to operate the aeration system. Diffused air systems are theoretically more efficient than surface aerators, particularly in clean water, but factors such as the presence of detergent which improve the efficiency of surface aerators but lessen the efficiency of diffused aeration, often result in similar performance. The transfer, into solution, of 2 kg of oxygen per kWh of energy consumed is considered a good target figure for such systems. The system required to transfer the separated solids back to the main tank also has a capital and operating cost.

Systems have been designed which dispense with the clarification tank. The first such systems attempted to achieve clarification by using baffles to create a clarification zone within the main treatment tank. However the difficulty of creating such a quiescent clarification zone adjacent to the high turbulence necessary to keep the flocculated micro-organisms in suspension meant such systems were at best only partially successful and were not commercially viable. In sequencing batch reactors the same tank is used both for treatment and clarification, the functions being separated in time. To achieve a viable system requires multiple tanks and a complex control system. To date it is not clear whether such systems achieve an overall space saving compared to the conventional aeration tank and clarification tank.

During treatment, organic waste material is part oxidised and part converted to settleable, particulate matter which is removed in the separation stage (most of the separated solids, which are biologically active, are returned to the process, but a portion is wasted for disposal). The degree of treatment depends both on the degree of oxidation/stabilisation and the efficiency of the separation process. An important feature of treatment is the oxidation of ammonia to nitrate. Though nitrate is much less toxic in the environment than ammonia, it is an important nutrient and can have unfavourable effects upon receiving waters.

Increasingly the removal of nitrate is also required. Nitrate reduction can be brought about in suspended growth systems in anoxic zones. Here the returned micro-organisms and untreated wastewater are mixed without aeration. A range of micro-organisms obtain energy for the oxidation of organic matter from the reduction of nitrate to gaseous nitrogen and nitrous oxide. In the conventional activated sludge process the degree of de-nitrification cannot exceed the ratio of the sludge return flow to the inflow, normally 50 to 75%. As well as being environmentally beneficial, de-nitrification is a means of recovering some of the energy used in dissolving oxygen necessary for nitrification and so is doubly beneficial.

A feature of municipal wastewater treatment plants is that they must deal with a diurnally varying inflow in terms of both strength and volume, both generally peaking in the late morning. As a result of this peak inflow, the micro-organisms necessary for treatment are transferred from the oxidation tank to the clarification tank just at the time of peak flow. This results in a reduced level of treatment, particularly of the oxidation of ammonia. Because of the retention time of the process, this typically results in higher levels of ammonia in the effluent in the evening period. This diurnal variation in performance may be avoided in traditional designs with low loadings, but prevents the further optimisation of designs. In theory the problem could also be overcome by sophisticated control of the rate of return of solids but this is not currently done because reliable instruments do not exist which can measure the required parameters in the environment of a sewage treatment plant.

GB-A-976,805 discloses a process and apparatus for sewage clarification by means of activated sludge having a tank for secondary aeration and a separate tank for settlement of solids.

The present invention seeks to provide a more efficient wastewater clarifying apparatus and an associated method of clarifying wastewater.

According to a first embodiment of the present invention there is provided a wastewater clarifying apparatus . Less energy is required than in suspended solids reactors as energy does not have to be supplied to keep the solids in suspension. A partition is to separate the tank into a treatment zone and a clarification zone. This has the advantage of reducing the capital cost of the plant and space required therefor. Normally, the partition extends downwardly from the liquid surface set at a predetermined level to a set height for example 1m belows the predetermined level. Advantageously the apparatus is arranged such that liquid in said base region only contains levels of dissolved oxygen suitable for de-nitrification of the liquid.

In a particularly preferred embodiment of the apparatus the aeration means comprises a weir. Preferably, there is a fall of a preset distance between the weir and the predetermined level and the preset distance is normally between 0.1m and 1.5m, preferably in the region of 0.5m.

The aeration means is advantageously arranged for providing sufficient dissolved oxygen in liquid near the top of the tank for aerobic treatment of said liquid and levels of dissolved oxygen in said liquid towards the bottom of the tank sufficient for de-nitrification of said liquid.

The transfer means preferably includes the weir, and liquid and solid from the base region of the tank are transferred to the predetermined level via the weir.

In a preferred embodiment, the weir has a total length of about 50m.

In larger scale installations it is preferred for the apparatus to include a plurality of aeration means and possibly also a plurality of clarification zones. This can keep the space requirement for the plant to a low level.

Preferably, the clarification zones comprise about 90% of the total surface area of the tank at the predetermined level.

In another preferred embodiment, an inlet for wastewater is provided towards the bottom of the tank, e.g. in the base region.

The apparatus will include an outlet for clarified water. Preferably, the outlet comprises a launder, e.g. of known design. In larger scale plants, a plurality of said outlets may be provided.

The apparatus is preferably arranged such that oxygen transfer in clean water tests are greater that 2Kg of oxygen per KWh.

Preferably, the apparatus is arranged for typical effluent quality in the region of: 5 to 10mg/l BOD, 5 to 10 mg/L SS, less than 1mg/L NH₃-N, and less than 1mg/L NO₃-N (provided that input had high enough BOD: N ratio).

Normally, the transfer means needs only to include a pump rather than more complex equipment. The pump is often mounted about the predetermined level.

According to a second aspect of the present invention there is provided a wastewater treatment process, as defined in claim 15
a) providing wastewater into a tank to provide liquid upto a predetermined level;
b) aerating the liquid sufficiently to allow oxidation of said liquid to form biosolids towards the top of the tank;
   the process characterised in the steps c) and d);
c) the tank has sufficiently low turbulence to allow biosolids to settle continuously towards the bottom of the tank; and
d) continuously recycling biosolids from towards the bottom of the tank to the predetermined level in the tank.

The treatment of the liquid occurs in a treatment zone of the tank and clarification occurs in a clarification zone of the same tank.

Advantageously, aerobic treatment of the liquid occurs towards the top of the tank and di-nitrification occurs towards the bottom of the tank.

The distribution of biosolids and the necessary aeration for treatment is achieved at the liquid surface by any means which introduces sufficiently low turbulence into the tank contents to allow the establishment of the necessary treatment and clarification zones. Advantageously, the distribution of biosolids and the necessary aeration for treatment both take place from an array of weir channels placed above the liquid surface of the treatment plant.

The method will often advantageously provide a gradient of dissolved oxygen levels between the liquid surface and the bottom of the treatment system. Preferably in the upper portion of the tank levels of dissolved oxygen are sufficient for full aerobic oxidation of waste matter including nitrification, and/or towards the bottom of the treatment system, levels of dissolved oxygen fall towards zero, establishing an anoxic zone in which de-nitrification occurs and optionally the process including repeated passing of the micro-organisms responsible for treatment through the different treatment zones.

In a preferred embodiment of the process, the degree of oxygen transfer is controlled by controlling the rate of pumping of the biosolids to the surface; and optionally the rate is controlled by controlling the rpm of pumps used in step d) and/or the angle of the impeller vanes of said pumps and/or by on-off control of a varying pattern of the pumps.

In preferred embodiments of the invention the following benefits may be obtained: The current invention preferably dispenses with the need for a clarification tank. The present invention may achieve an aeration efficiency in excess of the norm and may even achieve up to 100% de-nitrification with the associated environmental benefit and further improvement to the effective energy efficiency. Advantageously, the invention may reduce the problem of diurnal variability in performance since all solids are at all times in the treatment zone. Preferably, the invention allows very fine control of the degree of aeration thus even further reducing operating costs.

Two examples of implementing this invention will be given with reference to the following Figures 1 to 4. However, the invention is generic and can be implemented in a number of ways. In the drawings:
- Figure 1: illustrates a first preferred embodiment of an apparatus according to the present invention;
- Figure 2: illustrates a second preferred embodiment of an apparatus according to the present invention;
- Figure 3: illustrates a preferred design of a weir and baffle arrangement suitable for use with the present invention; and
- Figure 4: illustrate a preferred design of a weir channel for use with the present invention.

The invention superficially resembles a suspended growth process, where the suspended solids are responsible for the treatment of wastewater. However the crucial difference is that the solids are not maintained in suspension but allowed to continuously settle through a treatment zone. Solids from the bottom of the tank are returned and distributed over the liquid surface as an integral part of the aeration mechanism. Because of this new concept, and to bring it about, a form of surface aeration can be used which does not need to put in sufficient mixing energy to maintain the solids in suspension. This allows for the aeration system to be more efficient than other forms of mechanical aeration. In addition, because there is much less turbulence in the tank than in a conventional suspended growth system, it now becomes very easy simply to partition off part of the tank to act as a clarification zone before discharge of treated effluent if desired. Also because of the greatly reduced degree of turbulence, the tank is not well mixed in the vertical dimension. This allows a gradient of treatment zones to establish at different depths. At the surface of the tank dissolved oxygen levels are high enough for aerobic treatment including nitrification. At increasing depths, levels of dissolved oxygen fall until they are low enough for de-nitrification.

One form of aeration that is suitable for this concept is aeration from a weir. Liquor and solids from the bottom of the tank are pumped to weirs of suitable configuration placed above the top of the tank. From these weirs the liquor free falls onto the surface of the tank. From a height of e.g. 0.5 metres, from 3 to 4 mg/l of oxygen are effectively added to the re-circulating flow. In fact the bulk of the oxygenation takes place at the surface of the tank by bubbles entrained by the falling liquor. The levels of dissolved oxygen at the surface of the tank are maintained in the region of 1 mg/l. To give complete treatment the required re-circulating flow is likely to be in the region of 50-100 times the inflow rate (for municipal plant) depending on the strength of the wastewater being treated.

It can be seen that the only mechanical equipment required by this treatment system is a number of simple low head pumps such as are commonly used in fish farms. It is noted that prior to this invention, aeration from a weir could not be used as the dominant form of aeration in a biological treatment system since it does not induce enough turbulence to maintain solids in suspension.

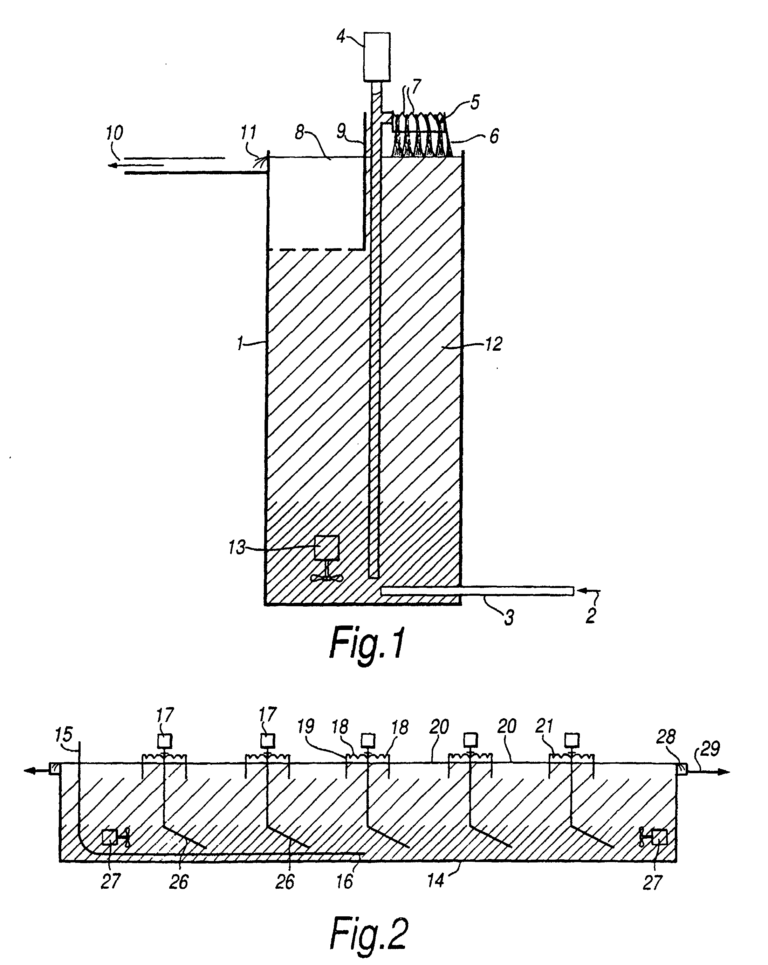

The invention is described in more detail initially with reference to Figure 1. Example dimensions are given suitable for a treatment plant for a population of about 150. Figure 2 presents an example suitable for a population of about 100,000.

In Figure 1, treatment takes place in a tank 1 2m in diameter, 5m deep. Feed wastewater 2 is introduced via a pipe 3, in a preferred configuration to the base of the tank. Solids are recycled via a pump 4 from the bottom of the tank to an aeration/distribution device, in this example a weir structure 5. The height of this weir structure influences the degree and efficiency of oxygen transfer into the falling re-circulating liquor 6. The lower the structure the lower is the amount of oxygen transferred per unit of liquor pumped as is the energy required to pump a unit of liquor. In fact the efficiency of oxygen transfer increases with decreasing height provided the height is sufficient to develop full turbulence in the liquor falling from the weir and normally weir height will be in the region of 0.1m to 1.5m. Heights in the region of 0.5m provide a particularly efficient transfer of oxygen. The height necessary to develop the required turbulent flow depends on the flow-rate per unit length of weir. In the example described in Figure 1, a high level of treatment will be given with a retention time of around 12 hours, a rate of inflow of wastewater of 0.33 l/s. A re-circulation ratio of 75:1 requires a re-circulation rate of 25 l/s. A suitable weir design is shown. This consists of a semi-circular weir trough, 1 m in diameter, giving a perimeter of approximately 2.5 metres. A suitable configuration of flow will be developed from touching 450 v-notches 7 placed around the weir perimeter, each 70mm wide. Other designs and configurations of weir are possible and will be in the normal competence of the skilled person to design and implement.

A clarification zone 8 is created by baffle 9 which extends across the diameter of the tank and extends to typically 1m below the liquid surface. Final effluent 10 leaves the tank through a peripheral launder 11 placed around the clarification zone. In Figure 1, the concentration of biosolids is approximately indicated by the closeness of the cross hatching. In practice the increase in biosolids concentration will be more gradual on descending through the tank, though there will be a sharp interface at the bottom of the clarification zone. During operation, the re-circulation rate is controlled such that the dissolved oxygen levels at the surface of the tank are in the region of 1 mg/l and drop to zero at the bottom of the tank due to consumption of oxygen by the active solids as they fall through the tank. This control can be achieved by one or more of the following techniques: altering the rpm of the pump, the angle of the impeller vanes or simply by on-off control of a pump of fixed speed and geometry. Nitrification and some BOD reduction take place in the upper levels of the process, de-nitrification and further BOD removal takes place at lower levels in the process.

During operation a biomass will develop in the liquor in the tank. By bleeding off a portion of mixed liquor 12 this can be controlled to a suitable level such as 3,000 mg/l nominal concentration. Solids picked up from the bottom of the tank are distributed over the weir and then settle through the tank back to the bottom. Depending on various factors, the rate of return of solids may be a little less than the rate of settlement of solids. A mixer 13 may be placed near the bottom of the tank. This mixer can be operated typically for 1 minute every 30 to prevent excessive settlement of the active biomass. An alternative to a mixer would be to fashion a hopper bottom to the tank thus ensuring that settling solids flow naturally to the inlet of the pump, placed at the bottom of the hopper.

Typical effluent quality from this invention is 5 to 10 mg/l BOD, 5 to 10 mg/l SS, < 1 mg/l NH3-N and < 1 mg/l NO3-N (very high levels of de-nitrification (low levels of NO3-N) depend on a sufficiently high BOD:N ratio in the feed wastewater). Typical efficiencies of oxygen transfer, measured in clean water tests are well in excess of 2kg of oxygen per kWh. Energy efficiencies during treatment are even higher when compared to conventional systems since in addition to the intrinsic high efficiency there is no energy requirement for settlement tank scrapers or sludge return and the very high levels of de-nitrification mean that the oxygen demand per unit of treatment is also less.

Large treatment plant based on the principles of this invention could be based on a simple scale-up of Figure 1, possibly keeping the depth the same). However this scaling up is not preferred as it could lead to an excessive number of pumps and the design of the clarification zone would be more complex.

A design is presented in Figure 2, which is a very elegant implementation for large works. It has the benefit that almost 90% of the surface of the reactor is used for clarification. As loadings are increased, this clarification area could be the limiting factor on treatment. Example dimensions are given for Figure 2, suitable to treat the wastewater from a population of 100,000. This design is not optimised.

Treatment takes place in a tank 14 50m by 40m by 6m deep. The feed of settled sewage 15 (at about 200 l/s average daily flow) is introduced into the centre of the tank 16 near the bottom. Like most wastewater treatment plants it would also be possible to treat finely screened crude sewage at a slightly lower loading and this is preferred as it would have the added benefit of increasing the BOD:N ratio thus favouring complete de-nitrification. Active solids, settling to the bottom of the tank, are pumped back to the surface by e.g. 30 low head pumps 17 arranged in e.g. a 5 by 6 rectangular array in the tank. Each pump is rated at e.g. 0.5 m³/s. Each pump delivers wastewater and solids to a weir arrangement 18 placed inside a circular baffle or coffer 19, e.g. 3m in diameter, that extends e.g. 1m below the liquid surface. All of the tank surface 20 outside of these circular baffles will be quiescent and will act as a clarification zone for the separation of the final effluent from the active solids. Aeration and distribution of solids is achieved by passing the tank liquor and settled solids to the weir arrangement placed e.g. 0.5m above the liquid surface inside each circular baffle such that it free-falls onto the liquid surface 21.

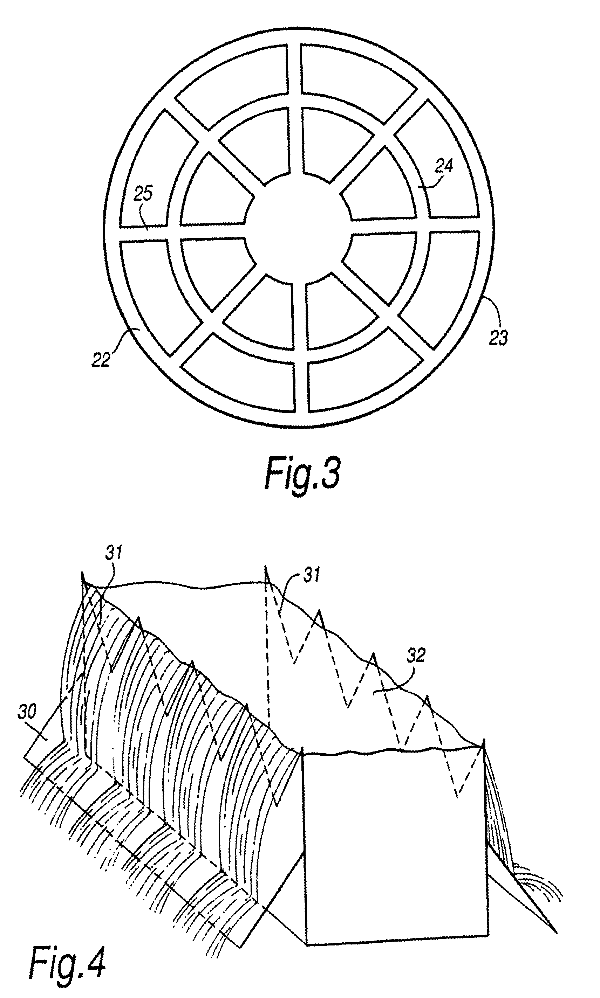

The length of weir 18 is an important factor in order to sufficiently distribute the flow onto the tank surface; too short a length of weir would cause the weir to become drowned by excessive flow and aeration would be inhibited. 50m is considered a sufficient length of weir per pump/baffle combination. This can be achieved as shown in Figure 3, a plan view of a singular circular baffle and weir arrangement. A peripheral weir channel 22 is placed around the inside of each circular baffle 23. A second double-sided weir channel 24 with a 2m diameter is fitted. These two channels are connected via 8 radiating double sided weir channels 25. V-notches are cut into the walls of the weir channels e.g. 15 no. 70mm wide, 45 degree v-notches per metre of weir channel wall.

The pipes 26 carrying solids and liquor to each pump can be angled such that they draw from a position central between 4 circular baffles, thus helping to keep unused volume in the tank to a minimum. Each such central position in the tank feeds one pump. A number, e.g. 10, submersible mixers 27 are placed around the tank, for intermittent use, e.g. 1-2 minutes every 30 minutes, to prevent a gradual excessive accumulation of solids in dead spots at the bottom of the tank. A number of dissolved oxygen probes are placed in the tank and used to control the levels of dissolved oxygen by the sequential turning off of varying numbers of the pumps (the pumps could be fitted with variable speed motors or variable pitch impellers in which case pump rates could be turned down).

Launders of standard design 28 are fitted around the tank for the collection of treated final effluent 29. A small increase in effluent quality might be achieved if additional launders are placed across the tank surface.

Figure 4 shows a section of a suitable configuration of a weir channel with, in this case, with both walls acting as a weir. A shoulder or inclined plate 30 placed below the v-notches 31 of the weir walls, will provide a small increase in aeration efficiency. Returned liquor 32 is flowing longitudinally down the channel and leaves via the plurality of v-notches placed along the channel walls. The inclined plate helps to break up and distribute the falling liquor onto the liquid surface.

The use of a variable head outlet device will allow further fine tuning of the efficiency of the process. If the water level in the tank is raised or lowered, this will respectively raise or lower the energy drawn by the pumps, moving their duty point with respect to the point of maximum efficiency, as well as lowering or raising respectively the amount of oxygen transferred.

Since only around 10% of the surface is used for aeration in the configuration for the larger system in Figure 2, the intensity of aeration within the circular baffled zones is higher than in the smaller system shown in Figure 1. This means that dissolved oxygen (DO) levels may rise significantly within the circular baffles. This could lead to a modest but perhaps significant reduction in aeration efficiency. To help overcome this, additional mixers (not shown) can be used to direct liquor from the vicinity of the circular baffles at e.g. 2m depth, into the baffled zones, thus reducing the level of dissolved oxygen therein.

Generally the present invention, the treatment of wastewater is brought about by active biosolids (micro-organisms) which are arranged to continually fall through the liquid being treated, in a tank. Biosolids are then pumped from the base of the tank to be distributed over the tank surface. This distribution can take place from a suitable array of channels placed above the tank surface. As well as distributing the biosolids, these channels act as weirs (typically v-notches are cut into the channel walls). Oxygen is dissolved in the liquid as it drops onto the liquid surface and by bubbles entrained into the surface layer of water in the tank. The geometric configuration of this process both allows for aeration from such weirs and requires an aeration process such as this which does not induce significant turbulence into the liquid in the tank. Other means of distribution and aeration which do not introduce excessive turbulence into the liquid in the tank would be suitable. Because treatment is taking place in a low turbulence, settling, regime, clarification zones to remove the active biosolids from the treated wastewater before discharge, are readily created by the placement of simple baffles extending to typically 1 metre below the liquid surface. A clarification zone is defined by any baffled area which does not receive re-circulating liquor from a weir channel. Treated wastewater is discharged from conventional launders placed within or around the clarification areas. There are a number of advantages from such a configuration when used for the treatment of wastewater.

## Claims

1. A wastewater clarifying apparatus including
- a settlement tank arranged to be filled with liquid to a predetermined level,
- aeration means arranged to aerate liquid in the region of said level, wherein the tank has sufficiently low turbulence to allow continuous settlement towards a base region of the tank of solids generated through aerobic treatment of said liquid,
- transfer means arranged to recycle at least some solids from the base region to the predetermined level,
- an outlet for clarified water,
**characterised by**
- a partition extending downwardly from said level towards the base region of the tank to separate the tank into
(i) a treatment zone in which said liquid is aerated, and
(ii) a clarification zone in communication with said treatment zone below said partition,
said outlet leading from said clarification zone.

2. The apparatus according to claim 1, wherein the apparatus includes a plurality of clarification zones; and optionally the clarification zones comprise about 90% of the total surface area of the tank at the predetermined level.

3. The apparatus according to any one of the preceding claims, wherein the aeration means comprises a weir.

4. The apparatus according to claim 3, wherein there is a fall of a preset distance between the weir and the predetermined level, and optionally the preset distance is between 0.1m and 1.5m, preferably in the region of 0.5m.

5. The apparatus according to claim 3 or 4, wherein the aeration means is arranged for providing sufficient dissolved oxygen in liquid near the top of the tank for aerobic treatment of said liquid and levels of dissolved oxygen in said liquid towards the bottom of the tank for di-nitrification of said liquid.

6. The apparatus according claim 3, 4 or 5, wherein the transfer means includes the weir and liquid and solid from the base region of the tank are transferred to the predetermined level via the weir.

7. The apparatus according to any one of claims 3 to 6, wherein the weir has a total length of about 50m.

8. The apparatus according to any one of the preceding claims, wherein the outlet comprises a launder; and/or further including a plurality of said outlets.

9. The apparatus according to any one of the preceding claims arranged such that liquid in said base region only contains levels of dissolved oxygen suitable for de-nitrification of the liquid.

10. The apparatus according to any one of the preceding claims, which includes a plurality of aeration means.

11. The apparatus according to any one of the preceding claims wherein an inlet for wastewater is provided towards the bottom of the tank, e.g. in the base region.

12. The apparatus according to any one of the preceding claims, arranged such that oxygen transfer in clean water tests are greater than 2Kg of oxygen per KWh.

13. The apparatus according to any one of the preceding claims, arranged for typical effluent quality in the region of: 5 to 10mg/l BOD, 5 to 10 mg/L SS, less than 1 mg/L NH₃-N, and less than 1 mg/L N03-N (provided that input had high enough BOD: N ratio).

14. The apparatus according to any one of the preceding claims, wherein the transfer means includes a pump; and optionally the pump is mounted about the predetermined level.

15. A wastewater treatment process, comprising the steps of:
- filling a settlement tank with liquid to a predetermined level,
- aerating the liquid in the region of said level, to allow oxidation of said liquid to form biosolids towards the top of the tank, the aeration being conducted in such a manner that the tank has sufficiently low turbulence to allow continuous settlement towards a base region of the tank of solids generated through aerobic treatment of said liquid,
- recycling at least some solids from the base region to the predetermined level,
- discharging clarified water from the tank,
**characterised by** providing a partition to separate the tank into
(i) a treatment zone in which said liquid is aerated, and
(ii) a clarification zone in communication with said treatment zone below said partition, from which clarification zone said clarified water is discharged.

16. The process according to claim 15, wherein the partition extends downwardly from said level towards the base region of the tank.

17. The process according to claim 15 or 16 conducted in the apparatus according to any one of claims 1 to 14.

18. The process according to any one of claims 15 to 17, wherein aerobic treatment of the liquid occurs towards the top of the tank and di-nitrification occurs towards the bottom of the tank.

19. The process according to any one of claims 15 to 18, in which the distribution of biosolids and the necessary aeration for treatment both take place from an array of weir channels placed above the liquid surface of the treatment plant.

20. The process according to any one of claims 15 to 19, where a number of aeration/distribution zones are created within small, typically circular, areas in the tank, the zones being created by baffles extending to typically 1m beneath the liquid surface, thus the major portion of the surface layer of liquid in the treatment tank acts as the clarification zone necessary for removing solids prior to discharge of treated wastewater.

21. The process according to any one of claims 15 to 20, in which a gradient of dissolved oxygen levels is established between the liquid surface and the bottom of the treatment system, and preferably in the upper portion of the tank levels of dissolved oxygen are sufficient for full aerobic oxidation of waste matter including nitrification, and/or towards the bottom of the treatment system, levels of dissolved oxygen fall towards zero, establishing an anoxic zone in which de-nitrification occurs and optionally the process including repeated passing of the micro-organisms responsible for treatment through the different treatment zones.

22. The process according to any one of claims 15 to 21, including the step of mixing the liquid, (e.g. by submerged mixers) in a highly intermittent manner, to re-suspend a portion of bio-solids which are not picked up by the means for transferring of the recycling step when the process is operated without additional mixing.

23. The process according to any one of claims 15 to 22, additional mixers are used to direct liquid into the aeration zones beneath the weirs so as to lower the level of dissolved oxygen in these zones and increase the efficiency of oxygen transfer.

24. The process according to any one of claims 15 to 23, where the degree of oxygen transfer is controlled by controlling the rate of pumping of the biosolids to the surface; and optionally the rate is controlled by controlling the rpm of pumps used in the recycling step and/or the angle of the impeller vanes of said pumps and/or by on-off control of a varying pattern of the pumps.

25. The process according to any one of claims 15 to 24, where control of the rate of oxygen transfer and the intrinsic efficiency of pumps used in the recycling step is obtained by varying the predetermined level in the treatment process, thus varying both the head against which the pumps must deliver together with the rate of pumping and also the height of fall from the weirs onto the liquid surface.

## Patentansprüche

1. Abwasserklärvorrichtung, welche umfaßt:
- einen Absetzbehälter, welcher für eine Füllung mit Flüssigkeit bis zu einer bestimmten Höhe ausgelegt ist,
- eine Belüftungseinrichtung, die zum Belüften der Flüssigkeit in dem Bereich dieser Höhe ausgelegt ist, wobei der Behälter eine ausreichend niedrige Turbulenz besitzt, um eine kontinuierliche Setzung von Feststoffen, die durch die aerobe Behandlung der Flüssigkeit erzeugt werden, zu einem Basisbereich des Behälters hin zu ermöglichen,
- eine Übertragungsoinrichtung, welche für die Rückführung wenigstens einiger Feststoffe aus dem Basisbereich auf die vorbestimmte Höhe ausgelegt ist,
- einen Auslaß für geklärtes Wasser,
gekonnzeichnet durch
- eine Trennwand, die sich von dieser Höhe nach unten zu dem Basisbereich des Behälters hin erstreckt, um den Tank zu trennen in
(i) eine Behandlungszone, in welcher die Flüssigkeit belüftet wird, und
(ii) eine Klärungszone in Verbindung mit der Behandlungszone unterhalb der Trennwand,
wobei der Auslaß aus der Klärungszone herausführt.

2. Vorrichtung nach Anspruch 1, wobei die Vorrichtung eine Vielzahl von Klärungszonen enthält; und optional die Klärungsizonen etwa 90 % des gesamten Öberflächenbereichs des Behälters auf der vorbestimmten Höhe umfassen.

3. Vorrichtung nach einem der vorstehenden Ansprüche, wobei die Belüftungseinrichtung ein Wehr aufweist.

4. Vorrichtung nach Anspruch 3, wobei ein Fall über einen voreingesbellten Abstand zwischen dem Wehr und der vorbestimmten Höhe vorliegt, und optional der voreingestellte Abstand zwischen 0,1 m und 1,5 m, bevorzugt im Bereich von 0,5 m liegt.

5. Vorrichtung nach Anspruch 3 oder 4, wobei die Belüftungseinrichtung dafür ausgelegt ist., ausreichend gelösten Sauerstoff in der Flüssigkeit in der Nähe der Oberfläche des Behälters für die aerobe Behandlung der Flüssigkeit und Pegel von gelöstem Sauerstoff in der Flüssigkeit zu dem Boden des Behälters hin zur Denitrifikation der Flüssigkeit bereitzustellen.

6. Vorrichtung nach Anspruch 3, 4 oder 5, wobei die Übertragungseinrichtung das Wehr umfaßt, und Flüssigkeit und Feststoff aus dem Basisbereich des Behälters auf die vorbestimmte Höhe mittels des Wehrs übertragen werden.

7. Vorrichtung nach Anspruch 3 bis 6, wobei das Wehr eine Gesamtlänge von etwa 50 m aufweist.

8. Vorrichtung nach einem der vorstehenden Amsprüche, wobei der Auslaß eine Schwemmrinne aufweist; und/oder ferner eine Vielzahl von Auslässen einschließt.

9. Vorrichtung nach einem der vorstehenden Ansprüche, die so ausgelegt ist, daß Flüssigkeit in dem Basisbereich nur Pegel an gelöstem Sauerstoff enthält, die zur Denitrifikation der Flüssigkeit geeignet sind.

10. Vorrichtung nach einem der vorstehenden Ansprüche, welche eine Vielzahl von Belüftungseinrichtungen enthält.

11. Vorrichtung nach einem der vorstehenden Ansprüche, wobei ein Einlaß für Abwasser zu dem Boden des Behälters hin, z.B. in dem Basisbereich vorgesehen ist.

12. Vorrichtung nach einem der vorstehenden Anaprüche, die so ausgelegt ist, daß eine Sauerstoffübertragung in Reinwassertests größer als 2 Kg Sauerstoff pro KWh ist.

13. Vorrichtung nach einem der vorstehenden Ansprüche, die so ausgelegt ist, daß die typische Auslaufqualität in dem Bereich liegt von; 5 bis 10 mg/l BOD (biologischer Sauerstoffbedarf), 5 bis 10 mg/l SS, weniger als 1 mg/l NH₃ -N, und weniger als 1 mg/l NOH₃-N (vorausgesetzt, daß der Einlaß ein genügend großes Verhältnis BOD:M hatte).

14. Vorrichtung nach einem der vorstehenden Ansprüche, wobei die Übertragungseinrichtung eine Pumpe enthält; und Optional die Pumpe über der vorbestimmten Höhe montiert ist.

15. Abwasserbehandlungsverfahren, welches die schritte aufweist:
- Füllen eines Absetzbehälters mit Flüssigkeit bis zu einer vorbestimmten Höhe,
- Belüften der Flüssigkeit in dem Bereich der Höhe, um eine Okidation der Flüssigkeit zur Ausbildung von Biofeststoffen zu dem oberen Bereich des Tanks hin zu ermöglichen, wobei die Belüftung in einer solchen Weise ausgeführe wird, daß der Tank eine ausreichend niedrige Turbulenz aufweist, um eine kontinuierliche Absetzung von Feststoffen, die durch die aerobe Behandlung der Flüssigkeit erzeugt werden, zu einem Basisbereich des Behälters hin zu ermöglichen.
- Rückführen wenigstens einiger Feststoffe aus dem Basisbereich auf die vorbestimmte Höhe.
- Auslassen des geklärtes Wassers aus dem Behälter,
**gekennzeichnet durch**
- das Bereitstellen einer Trennwand, um den Tank in
(i) eine Behandlungszone, in welcher die Flüssigkeit belüftet wird, und
(ii) eine Klärungszone in Verbindung mit der Behandlungszone unterhalb der Trennwand zu trennen, wobei aus der Klärungszone das geklärte Wasser ausgelassen wird,

16. Verfahren nach Anspruch 15, wobei sich die Trennwand nach unten von dieser Höhe zu dem Basisbereich des Behälters hin erstreckt.

17. Verfahren nach Anspruch 15 oder 16, das in der Vorrichtung nach einem der Ansprüche 1 bis 14 ausgeführt wird.

18. Verfahren nach einem der Ansprüche 15 bis 17, wobei die aero.oe Behandlung der Flüssigkeit zu dem Oberteil des Behälters hin erfolgt, und die Denitrifikation zu dem Boden des Behälters hin erfolgt.

19. Verfahren nach einem der Ansprüche 15 bis 18, in welchem die Verteilung von Biofeststoffen und die notwendige Belüftung für die Behandlung beider an einer Anordnung von Wehrkanälen stattfinden, welche oberhalb der Flüssigkeitsoberfläche der Behandlungsanlage angeordnet sind.

20. Verfahren nach einem der Ansprüche 15 bis 19, wobei eine Anzahl von Belüftungs-/Verteilungszonen innerhalb kleiner, typischerweise runder Bereiche in dem Behälter erzeugt. werden, wobei die Zonen durch Tauchwände erzeugt werden, welche sich typischerweise bis 1 m unter die Flüssigkeitsoberfläche erstrecken, womit der größere Anteil der Oberflächenschicht der Flüssigkeit in dem Behandlungsbehälter als die Klärungszone wirkt, welche für die Entfernung von Feststoffen vor dem Auslassen des behandelten Abwassers erforderlich ist.

21. Verfahren nach einem der Ansprüche 15 bis 20, in welchem ein Gradient von Pegeln gelösten Sauerstoffs zwischen der Flüssigkeitsoberfläche und dem Boden des Behandlungssystema aufgebaut wird, und bevorzugt in dem oberen Abschnitt des Behälters Pegel des gelösten Sauerstoffs für eine vollständige aerobe Oxidation von Abfallmaterial einschließlich Nitrifikation ausreichen, und/oder zum Boden des Behandlungssystems hin die Pegel des gelösten Sauerstoffs auf 0 fallen, wodurch eine sauerstofffreie Zone aufgebaut wird, in welcher Denitrifikation erfolgt, und optional das Verfahren wiederholtes Durchleiten der Mikroorganismen beinhaltet, welche für die Behandlung durch die unterschiedlichen Behandlungszonen hindurch verantwortlich sind.

22. Verfahren nach einem der Ansprüche 15 bis 21, das den Schritt der Mischung der Flüssigkeit (beispielsweise durch Tauchmischer) in einer stark intermittierenden Weise umfaßt, um einen Anteil von Biofeststoffen, welche nicht von der Einrichtung für die Übertragung des Rückführungsschrittes aufgenommen werden, wieder in Schwebe zu bringen, wenn das Verfahren ohne zusätzliches Vermischen ausgeführt wird,

23. Verfahren nach einem der Ansprüche 15 bie 22, wobei zusätzliche Mischer verwendet werden, um Flüssigkeit in die Belüftungszonen unterhalb der Wehre zu leiten, um so den Pegel an gelöstem Sauerstoff in diesen Zonen zu verringern und den Wirkungsgrad der Sauerstoffübertragung zu verbessern.

24. Verfahren nach einem der Ansprüche 15 bis 22, wobei der Grad der Sauerstoffübertragung durch die Steuerung der Pumprate von Biofeststoffen zu der Oberfläche hin gesteuert wird; und optional die Rate durch Steuerung der Drehzahl der im Rückführungsschritt verwendeten Pumpen und/oder des Winkels der Impellerflügel der Pumpen und/oder durch eine Ein/Aus-Steuerung eines variierenden Musters der Pumpen gesteuert wird.

25. Verfahren nach einem der Ansprüche 15 bis 24, wobei die Steuerung der Rate der Sauerstoffübertragung und des Eigenwirkungsgrades der im Rückführungsschritt verwendeten Pumpen durch die Variierung der vorbestimmten Höhe in dem Behandlungsverfahren erzielt wird, und somit sowohl die Höhe, gegen welche die Pumpen liefern müssen, zusammen mit der Pumprate und auch der Fallhöhe von den Wehren auf die Flüssigkeitsoberfläche variiert wird.

## Revendications

1. Appareil d'épuration d'eaux usées comprenant
- un réservoir de décantation agencé pour être rempli de liquide à un niveau prédéterminé,
- des moyens d'aération agencés pour aérer le liquide dans la région dudit niveau, dans lequel le réservoir a une turbulence suffisamment faible pour permettre une décantation continue vers une région de base du réservoir de solides générés par traitement aérobie du liquide,
- des moyens de transfert agencés pour recycler au moins certains solides depuis la région de base jusqu'au niveau prédéterminé,
- un orifice de sortie pour l'eau épurée,
**caractérisé par**
- une cloison s'étendant vers le bas depuis ledit niveau vers la région de base du réservoir pour séparer le réservoir en
- (i) une zone de traitement dans laquelle le liquide est aéré, et
- (ii) une zone de décantation en communication avec la zone de traitement au-dessous de ladite cloison,
ledit orifice de sortie conduisant à partir de la zone de décantation.

2. Appareil selon la revendication 1 dans lequel l'appareil comporte une pluralité de zones de décantation; et optionnellement les zones de décantation comprennent 90% de la zone superficielle totale du réservoir au niveau prédéterminé.

3. Appareil selon l'une quelconque des revendications précédentes dans lequel les moyens d'aération comprennent un déversoir.

4. Appareil selon la revendication 3 dans lequel il y a une chute de la distance pré-établie entre le déversoir et le niveau prédéterminé, et optionnellement la distance pré-établie est comprise entre 0.1 m et 1.5 m, de préférence d'environ 0,5 m.

5. Appareil selon la revendication 3 ou 4 dans lequel les moyens d'aération sont agencés pour fournir de l'oxygène dissous suffisant dans le liquide près du sommet du réservoir pour le traitement aérobie dudit liquide et des niveaux d'oxygène dissous dans le liquide vers le fond du réservoir pour la dénitrification du liquide.

6. Appareil selon la revendication 3, 4 ou 5 dans lequel les moyens de transfert comprennent le déversoir, et le liquide ainsi que le solide de la région de base du réservoir sont transférés jusqu'au niveau prédéterminé via le déversoir.

7. Appareil selon l'une quelconque des revendications 3 à 6 dans lequel le déversoir a une longueur totale d'environ 50 m.

8. Appareil selon l'une quelconque des revendications précédentes dans lequel l'orifice de sortie comporte une goulotte ; et/ou comprend de plus une pluralité desdits orifices de sortie.

9. Appareil selon l'une quelconque des revendications précédentes agencé de façon que seulement le liquide dans la région de base contienne des niveaux d'oxygène dissous appropriés pour la dé-nitrification du liquide.

10. Appareil selon l'une quelconque des revendications précédentes qui comprend une pluralité de moyens d'aération.

11. Appareil selon l'une quelconque des revendications précédentes dans lequel un orifice d'entrée pour les eaux usées est ménagé vers le fond du réservoir, par exemple dans la région de base.

12. Appareil selon l'une quelconque des revendications précédentes agencé de façon que le transfert d'oxygène dans des essais d'eau propre soit supérieur à 2 Kg d'oxygène par KWh.

13. Appareil selon l'une quelconque des revendications précédentes agencé pour la qualité d'effluent typique dans la région de : 5 à 10 mg/l BOD, 5 à 10 mg/L de matières en suspension, moins de 1 mg/L de NH₃ - N, et moins de 1mg/L de NO₃-N (pourvu que l'entrée ait un rapport DBO : N suffisamment élevé).

14. Appareil selon l'une quelconque des revendications précédentes dans lequel les moyens de transfert comportent une pompe ; et optionnellement la pompe est montée dans la région du niveau prédéterminé.

15. Procédé de traitement d'eaux usées, comprenant les étapes suivantes :
- remplissage d'un réservoir de décantation d'un liquide jusqu'à un niveau prédéterminé,
- aération du liquide dans la région dudit niveau pour permettre l'oxydation du liquide pour former des bio-solides vers le sommet du réservoir, l'aération étant conduite de telle façon que le réservoir ait une turbulence suffisamment faible pour permettre une décantation continue vers une région de base du réservoir de solides générés par traitement aérobie dudit liquide,
- recyclage d'au moins certains solides depuis la région de base jusqu'au niveau prédéterminé,
- évacuation de l'eau décantée du réservoir,
**caractérisé par** l'agencement d'une cloison pour séparer le réservoir en
(i) une zone de traitement dans laquelle ledit liquide est aéré, et
(ii) une zone de décantation en communication avec la zone de traitement au-dessous de ladite cloison, zone de décantation à partir de laquelle l'eau est évacuée.

16. Procédé selon la revendication 15 dans lequel la cloison s'étend vers le bas à partir dudit niveau vers la région de base du réservoir.

17. Procédé selon la revendication 15 ou 16 mis en oeuvre dans l'appareil selon l'une quelconque des revendications 1 à 14.

18. Procédé selon l'une quelconque des revendications 15 à 17 dans lequel le traitement aérobie se produit vers le sommet du réservoir et la dénitrification se produit vers le fond du réservoir.

19. Procédé selon l'une quelconque des revendications 15 à 18 dans lequel la distribution de bio-solides et la nécessaire aération pour le traitement ont lieu toutes deux à partir d'un faisceau de canaux du déversoir placés au-dessus de la surface du liquide de l'installation de traitement.

20. Procédé selon l'une quelconque des revendications 15 à 19 dans lequel un certain nombre de zones d'aération/distribution sont créées à l'intérieur de petites aires dans le réservoir, par exemple circulaires, ces zones étant créées par des déflecteurs s'étendant typiquement jusqu'à 1 m au-dessous de la surface du liquide, de sorte qu'ainsi la majeure partie de la couche superficielle du liquide dans le réservoir de traitement agit comme la zone de décantation nécessaire pour enlever les solides avant l'évacuation des eaux usées traitées.

21. Procédé selon l'une quelconque des revendications 15 à 20 dans lequel un gradient de niveaux d'oxygène dissous est établi entre la surface du liquide et le fond du système de traitement, et de préférence dans la partie supérieure du réservoir les niveaux d'oxygène dissous sont suffisants pour l'oxydation aérobie complète de matières usées y compris la nitrification, et/ou vers le fond du système de traitement les niveaux d'oxygène dissous tombent vers zéro, établissant une zone sans oxydation dans laquelle se produit la dénitrification et optionnellement le procédé inclut un passage répété des micro-organismes responsables du traitement à travers les différentes zones de traitement.

22. Procédé selon l'une quelconque des revendications 15 à 21 incluant l'étape de mélange du liquide, (par ex. par des mélangeurs immergés) d'une façon hautement intermittente pour remettre en suspension une partie des bio-solides qui ne sont pas ramassés par les moyens de transfert de l'étape de recyclage quand le procédé est mis en oeuvre sans mélange additionnel.

23. Procédé selon l'une quelconque des revendications 15 à 22 dans lequel des mélangeurs additionnels sont utilisés pour diriger du liquide dans les zones d'aération au-dessous des déversoirs, de façon à abaisser dans ces zones le niveau d'oxygène dissous et à augmenter le rendement du transfert d'oxygène.

24. Procédé selon l'une quelconque des revendications 15 à 23 où le degré de transfert d'oxygène est commandé par commande de la vitesse de pompage des bio-solides jusqu'à la surface; et optionnellement la vitesse est commandée par commande de la vitesse de rotation des pompes utilisées dans l'étape de recyclage et /ou de l'angle des pales des hélices desdites pompes et/ou commande de déclenchement - arrêt d'un mode de fonctionnement variable des pompes.

25. Procédé selon l'une quelconque des revendications 15 à 24 dans lequel la commande du taux de transfert d'oxygène et le rendement intrinsèque des pompes utilisées dans l'étape de recyclage sont obtenus en faisant varier le niveau prédéterminé dans le procédé de traitement, en faisant ainsi varier la différence des deux niveaux contre laquelle les pompes doivent refouler vis-à-vis de la vitesse de pompage et également la hauteur de chute à partir des déversoirs sur la surface du liquide.
